# FASCICULE DE BREVET EUROPEEN

(11) **EP 0 742 264 B1**
(45) Date de publication et mention de la délivrance du brevet: **29.10.1997**
(21) Numéro de dépôt: 96400719.9
(22) Date de dépôt: 03.04.1996
(51) Int. Cl.: C08F 220/30, C08F 216/12, C04B 26/06, C08L 33/06, C08K 5/00

(54) **Composition à base d'ester dicyclopentényloxyalkylique de l'acide (meth)acrylique et ses applications dans le domaine du bâtiment**
Zusammensetzung auf der Basis von Dicyclopentadienyloxyestern von (meth)acrylsäure und ihre Verwendung im Bausektor
Composition based on dicyclopentadienyloxy ester of (meth)acrylic acid and their use in the field of construction

(30) Priorité: 13.04.1995 FR 9504466
(43) Date de publication de la demande: 13.11.1996
(73) Titulaire: ELF ATOCHEM S.A., 92800 Puteaux (FR)
(72) Inventeur: Vanhoye, Didier, 27300 Bernay (FR); Barbier, Yves, 60700 Pontpoint (FR); Cerf, Martine, 27300 Bernay (FR); Wnuk, Mieczyslaw, 27410 Sainte Marguerite en Ouche (FR)
(74) Mandataire: Rieux, Michel

(56) Documents cités:
- EP-A- 0 047 120
- EP-A- 0 419 657
- US-A- 5 098 973

## Description

La présente invention porte sur une composition à base d'ester dicyclopentényloxyalkylique de l'acide (méth)acrylique, ladite composition étant destinée à être utilisée dans le domaine du bâtiment, comme liant dans la préparation de mortiers ou de bétons de résines synthétiques, ou comme primaire d'accrochage, ou encore comme revêtement de finition, auquel cas la composition peut comporter un ou des pigments pour obtenir la teinte finale désirée.

Le développement de revêtements de sols à base de mortiers ou bétons de résine de méthacrylate de méthyle a permis de pouvoir réaliser des chantiers dans des conditions de températures proches de 0°C, conditions pour lesquelles les systèmes à base époxy ou polyuréthanes sont inopérants. Par ailleurs, la faible viscosité de ce monomère apporte l'avantage de bien remplir les vides et fissures, améliorant ainsi les performances mécaniques. Cependant, les inconvénients majeurs de l'utilisation du méthacrylate de méthyle sont constitués par son odeur, son point éclair peu élevé, et son retrait important.

Dans le but de réduire ces inconvénients, l'utilisation d'un nouveau monomère méthacrylique, à savoir le méthacrylate de dicyclopentényloxyéthyle (DCPOEMA), a été proposée dans les documents brevets US-A-4 299 761, EP-A-47 120, US-A-4 400 413 et US-A-4 460 625. Ce monomère, de haut point d'ébullition et porteur de deux doubles liaisons de natures et réactivités différentes, possède en effet une très faible odeur et conduit à un retrait nettement plus faible que celui du méthacrylate de méthyle.

L'utilisation de monomères de haut point d'ébullition et de forte masse molaire pose cependant des problèmes de limitation de la vitesse de polymérisation superficielle due à une inhibition par l'oxygène de l'air et se traduisant par la persistance d'un poissage pendant un laps de temps allant jusqu'à plus de 24 heures. Ces problèmes sont particulièrement évidents lors de l'utilisation du DCPOEMA et des monomères analogues.

Conformément aux documents-brevets précités, on peut résoudre ce problème en recouvrant la surface par un liquide non miscible, faisant barrière à l'oxygène et pouvant contenir un amorceur de polymérisation. Cette solution entraîne néanmoins le désavantage de faire apparaître les charges en surface et de réduire la résistance chimique du matériau.

Il est également connu que l'utilisation de sels ou complexes de métaux de transition, tels que le cobalt, le manganèse et le zirconium, appelés couramment siccatifs, permet de réduire le temps de durcissement de la surface sans toutefois descendre en deçà de 8 heures. Pour augmenter la vitesse de siccativation et diminuer la reprise d'eau, il est également possible d'incorporer des acides gras insaturés comme décrit dans la demande de brevet européen EP-A-157 596. Cependant, cette amélioration de la siccativation ne permet toutefois pas d'obtenir un temps sous poissage inférieur à 6-8 heures. Pour inhiber l'action de l'oxygène, des agents réducteurs, tels que les aldéhydes et les imines, peuvent être ajoutés au moment de la polymérisation, comme décrit dans la demande de brevet européen EP-A-169 702, avec cependant les inconvénients d'une possible oxydation prématurée de l'aldéhyde et de la nécessité d'une présence d'eau pour ouvrir la fonction imine (fonction aldéhyde bloquée).

Le développement de bétons de résines synthétiques à base de méthacrylate de dicyclopentényloxyéthyle et analogues requiert donc de nouvelles solutions pour résoudre les problèmes techniques liés à la faible vitesse de séchage du revêtement.

De plus, ce marché est également demandeur de matériaux présentant une résistance thermique améliorée et une bonne résistance aux agents chimiques, tels qu'acides, bases et solvants.

La Société déposante a maintenant découvert que, de manière surprenante, l'utilisation de (poly)allyl glycidyl éthers pour activer la polymérisation du méthacrylate de dicyclopentényloxyéthyle et des monomères analogues permettait d'obtenir des liants pour bétons ou mortiers de résines synthétiques présentant un temps de séchage amélioré, et des revêtements de sols présentant seulement 2 à 4 heures après l'application, une surface dure, sèche, lisse, imperméable et résistante aux intempéries et agressions chimiques, ce qui présente une amélioration très nette par rapport à l'état antérieur de la technique.

L'utilisation de (poly)allyl glycidyl éthers dans des compositions de liant pour bétons ou mortiers ou de primaire d'accrochage ou de revêtement de finition, majoritairement composés de (méth)acrylate de dicyclopentényloxyalkyle ou similaires, n'est pas connue à ce jour :

J.W. Knapczyk, "Journal of Coating Technology", Vol. 60, n° 756, Janvier 1988, pages 63 à 72, a décrit l'accélération de la formation de films de triacrylate de pentaérythritol, d'hydroxypentaacrylate de dipentaérythritol, de triacrylate de triméthylolpropane, d'uréthane acrylate, d'époxyacrylate, de diacrylate de tétraéthylène glycol, de diacrylate d'hexanediol, sous l'effet de (poly)allyl glycidyl éthers. W. Demarteau et J.M. Loutz, "Double Liaison - Chimie des Peintures n° 411-412 Janvier-Février 1990, pages 11/29 à 34/16, ont montré qu'il est possible de durcir des prépolymères portant des fonctions acrylate (polyesters acrylates, éthoxyacrylates, uréthanes acrylates) par un mécanisme en chaîne à l'aide d'initiateurs générateurs de radicaux libres, à la condition d'ajouter aux formulations un (poly)allyl glycidyl éther. E.S. Jensen et al, "Journal of Applied Polymer Science", Vol. 42, 2681-2689 (1991), pages 2681-2689, ont montré que les résines de (poly)allyl glycidyl éthers, en combinaison avec un amorceur et un catalyseur, favorisent le durcissement des acrylates multifonctionnels en présence d'air, sans pour autant parvenir au même résultat qu'en l'absence d'air.

On ne pouvait cependant déduire de ces travaux que l'incorporation de (poly)allyl glycidyl éthers dans des formulations à base de (méth)acrylate de dicyclopentényloxyalkyle et similaires permettrait une réaction aussi rapide, conduisant à une disparition extrêmement rapide du caractère collant ("tack") en surface. En effet, la vitesse de polymérisation du DCPOEMA est nettement plus ralentie en présence d'air que celle des monomères multifonctionnels. D'autre part, il est bien connu que la vitesse de polymérisation des monomères multifonctionnels est plus rapide que celle des monomères monofonctionnels (la double liaison allylique du DCPOEMA ne participe pas à la polymérisation, mais à la réticulation postérieure par siccativation). Cependant, pour les (méth)acrylates multifonctionnels, cette réactivité plus forte s'accompagne d'un taux de monomères résiduels important dû à la gélification du milieu par établissement d'un réseau tridimensionnel et conduisant à un "tack" résiduel. Dans ce cadre, l'utilisation des (poly)allyl glycidyl éthers comme initiateurs secondaires permet de diminuer fortement la teneur en monomères résiduels.

Dans le cas du DCPOEMA et des monomères analogues, les (poly)allyl glycidyl éthers interviennent plus pour piéger l'oxygène de l'air et éviter la formation d'oligomères oxygénés de bas poids moléculaire en ne limitant pas la vitesse de polymérisation du DCPOEMA et analogues.

Par ailleurs, on a constaté que les (poly)allyl glycidyl éthers conduisent, dans le cas de la présente invention, à des bétons de résines moins rigides et à des revêtements plus souples.

La présente invention a donc d'abord pour objet une composition destinée à être utilisée comme liant dans la préparation de mortiers ou bétons de résines synthétiques ou comme primaire d'accrochage ou comme revêtement de finition, caractérisée par le fait qu'elle comprend :
(A) un système de monomères comprenant :
   (a1) 50 à 90 parties en poids d'un ester dicyclopentényloxyalkylique de formule (I) : 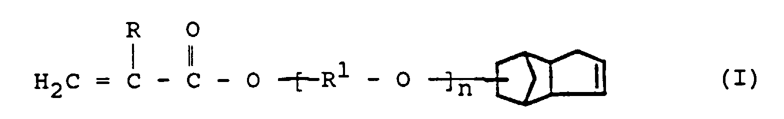 dans laquelle :
      - R représente H ou CH₃ ;
      - n vaut 1 ou 2 ; et
      - R¹ représente un groupe alkylène en C₂-C₆ ;
   (a2) 0 à 25 parties en poids d'au moins un (méth)acrylate lourd donnant un homopolymère dont la température de transition vitreuse est supérieure à la température de transition vitreuse d'un homopolymère de l'ester (a1) ;
   (a3) 0 à 25 parties en poids d'au moins un (méth)acrylate lourd donnant un homopolymère dont la température de transition vitreuse est inférieure à la température de transition vitreuse d'un homopolymère de l'ester (a1) ;
   (a4) 0 à 25 parties en poids d'au moins un monomère présentant au moins deux insaturations (méth)acryliques ; et
(B) 5 à 30 parties en poids d'au moins un (poly)allyl glycidyl éther ; et
(C) un système d'amorçage choisi parmi les systèmes (C1) à (C4) suivants :
   (C1) 0,1 à 3 parties en poids d'au moins un peroxyde organique dérivé d'un composé hydrocarboné en C₃-C₁₈, et 0,1 à 2 parties en poids d'au moins une amine aromatique ;
   (C2) 0,1 à 3 parties en poids d'au moins un hydroperoxyde organique dérivé d'un composé hydrocarboné en C₃-C₁₈, et 0,0005 à 2 parties en poids d'au moins un sel métallique polyvalent ;
   (C3) un mélange de (C1) et de 0,0005 à 2 parties en poids d'au moins un sel métallique polyvalent ; et
   (C4) un mélange de (C1) et (C2),
toutes les quantités étant données pour 100 parties en poids de (A) + (B).

L'ester (a1) préféré est le méthacrylate de dicyclopentényloxyéthyle.

Les (méth)acrylates lourds (a2) sont destinés à augmenter la dureté de la composition après polymérisation ; quant aux méthacrylates lourds (a3), ils jouent le rôle de plastifiants internes.

Les (méth)acrylates lourds (a2) sont notamment choisis parmi le méthacrylate d'isobornyle, l'acrylate d'isobornyle et le méthacrylate de tertiobutylcyclohexyle ; et les (méth)acrylates lourds (a3) sont notamment choisis parmi le méthacrylate d'éthyltriglycol, l'acrylate de lauryle, l'acrylate de stéaryle, le méthacrylate de nonyle, l'acrylate de nonyle, le méthacrylate de lauryle et le méthacrylate de stéaryle, ceux que l'on préfère étant les (méth)acrylates possédant une chaîne alkyle, linéaire ou ramifiée, ayant 12 ou plus de 12 atomes de carbone.

Les monomères (a4) sont destinés à augmenter les performances mécaniques du matériau : résistance à la compression, résistance à l'abrasion, etc. ; d'une manière générale, tous les réticulants classiquement utilisés en série (méth)acrylique conviennent, et on les choisit notamment parmi le triméthacrylate de triméthylolpropane, le triacrylate de triméthylolpropane, le diméthacrylate de bisphénol A, le diméthacrylate de butanediol, le diméthacrylate d'hexanediol, le diméthacrylate de tripropylène glycol et le diméthacrylate de bisphénol A diglycidyléther, et, de préférence, le triméthacrylate de triméthylolpropane.

Les (poly)allyl glycidyl éthers (B) sont avantageusement choisis parmi ceux présentant des tensions de vapeur suffisamment faibles pour que la composition résultante soit sensiblement sans odeur.

A titre d'exemples de (poly) allyl glycidyl éthers (B), on peut citer ceux représentés par les formules suivantes (II), (III) et (IV) : 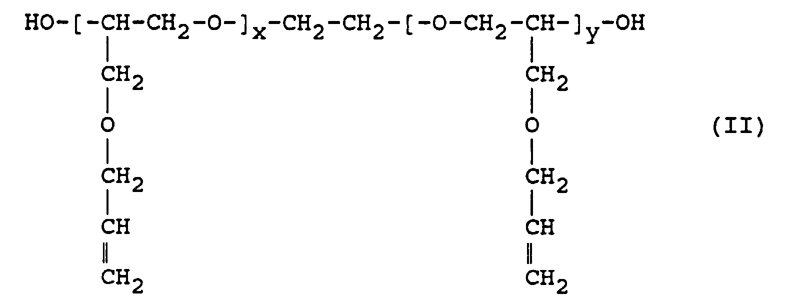 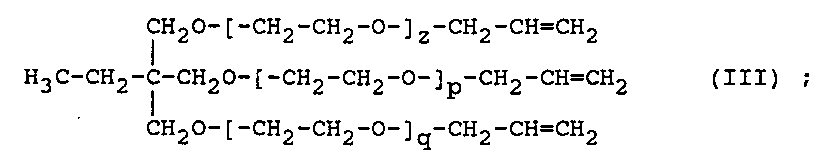 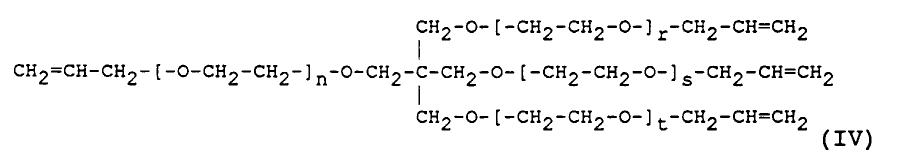 dans lesquelles x, y, z, p, q, r, s et t représentent chacun un entier de 2 à 10 inclus.

Ces oligomères (B), de par leurs fonctions allyliques facilement peroxydables, jouent un rôle d'amorceur et de réticulant. Ils permettent également de fortement réduire l'inhibition par l'oxygène de l'air, ce qui permet de maintenir une vitesse de polymérisation superficielle suffisante pour diminuer, dans le cas d'un revêtement mais aussi pour la surface du béton (sans revêtements spécifiques), le caractère poisseux dans le temps qui suit la pose dudit revêtement ou dudit béton.

Parmi les peroxydes organiques entrant dans la formulation des systèmes d'amorçage (C1), (C3) et (C4), on peut citer le peroxyde de dibenzoyle, le perbenzoate de tertiobutyle, le 2,2-bis-(tertiobutylperoxy)butane et le tertiobutylperoxyisopropylcarbonate ; et parmi les hydroperoxydes entrant dans la formulation des systèmes d'amorçage (C2) et (C4), on peut citer l'hydroperoxyde de cumène, l'hydroperoxyde de tertiobutyle, l'hydroperoxyde de méthyléthylcétone et le diméthyl-2,5-bis-hydroperoxyde-2,5-hexane. Les amines aromatiques entrant dans la formulation des systèmes d'amorçage (C1), (C3) et (C4) peuvent être choisies parmi la N,N-diméthylaniline, la N,N-diméthylparatoluidine et le para-N,N-diméthylaminobenzaldéhyde. Quant aux sels métalliques polyvalents entrant dans la formulation des systèmes d'amorçage (C2), (C3) et (C4), ce sont notamment des sels d'acides carboxyliques lourds en C₄-C₃₀ ; on peut citer en particulier les naphténates et octoates de cobalt II, de potassium, de calcium, de zirconium, de nickel ou de manganèse, ainsi que leurs mélanges.

La composition selon l'invention, dont les constituants individuels viennent d'être décrits, se présente avantageusement sous la forme d'un système à deux composants devant être mélangés au moment de l'emploi. De manière préférée, l'un des composants est constitué par le système de monomères (A) et par le (ou les) amine(s) tertiaire(s) et/ou le (ou les) sel(s) métallique(s) du système d'amorçage (C), et l'autre composant, par le (ou les) (poly)allyl glycidyl éther(s) (B) et par le (ou les) peroxyde(s) et/ou le (ou les) hydroperoxyde(s) du système d'amorçage (C).

La présente invention porte également sur une composition de béton ou mortier de résine synthétique, comprenant des charges minérales inertes et un liant, ce dernier ayant la composition telle que définie ci-dessus. D'une manière générale, une telle composition comprend, pour 100 parties en poids :
- 10 à 25 parties de ladite composition selon l'invention formant le liant ; et
- 90 à 75 parties desdites charges.

Ces dernières ont une granulométrie généralement comprise entre 100 µm et 9,5 mm. Toutefois la répartition granulométrique desdites charges est le plus souvent étudiée pour minimiser les vides, de façon à utiliser une quantité minimale de monomères pour diminuer le coût et le retrait. Les charges sont notamment choisies parmi le sable, le gravier, la silice, le carbonate de calcium et le ciment Portland.

La présente invention porte aussi sur un béton ou mortier de résine auto-lissant obtenu à partir de la composition de béton ou mortier telle que définie ci-dessus.

On prépare le béton ou mortier de résine synthétique selon l'invention en mélangeant les monomères et les amorceurs précédemment décrits préfigurant le liant avec les charges minérales, selon les techniques bien connues de l'homme du métier. On peut par exemple préparer une formulation contenant le (poly)allyl glycidyl éther, les peroxydes et/ou hydroperoxydes et les charges, et mélanger celle-ci avec le reste des constituants de la composition de liant. La préparation est effectuée dans les conditions de température habituellement rencontrées sur les chantiers : -10 à +50°C sans problème particulier. Les quantités d'activateur (amine tertiaire et sel métallique polyvalent) peuvent être modifiées sur place le cas échéant, pour obtenir le temps de prise souhaité. En fonction de l'application envisagée, le mélange peut être coulé dans un moule pour réaliser des panneaux, dalles ou similaires, ou être coulé directement sur le sol à réparer ou à revêtir, l'application se faisant dans ce cas par talochage manuel ou mécanique pour obtenir une épaisseur généralement comprise entre 1 et 50 mm.

Selon la présente invention, on obtient un béton de résine auto-lissant ne présentant pas d'odeur déplaisante et durcissant pendant des temps de 5 à 60 minutes en coeur et de 2 à 4 heures en surface, au lieu de 15 à 75 minutes en coeur et 8 à 24 heures en surface pour les systèmes sans (poly)allyl glycidyl éther(s).

La présente invention porte aussi sur une composition de primaire d'accrochage, laquelle comprend la composition telle que définie ci-dessus (sans les charges), ainsi que sur une composition de revêtement de finition, destinée à être appliquée notamment sur les bétons ou matériaux poreux et comprenant la composition telle que définie ci-dessus (sans les charges), le cas échéant en mélange avec au moins un pigment minéral ou organique, le (ou les) pigment(s) étant présents dans les proportions usuelles.

Enfin, la présente invention porte sur un revêtement de sol, appliqué notamment sur un sol de béton hydraulique, caractérisé par le fait qu'il comprend la succession des trois couches suivantes :
- une première couche d'accrochage, obtenue à partir de la composition de primaire selon l'invention, appliquée en une épaisseur d'environ 0,1 à 0,5 mm ;
- une deuxième couche de béton de résine synthétique, obtenue à partir de la composition de béton selon l'invention, appliquée en une épaisseur d'environ 1 à 50 mm ; et
- une troisième couche de finition, obtenue à partir de la composition de revêtement selon l'invention, appliquée en une épaisseur d'environ 0,2 à 0,5 mm.

Cette dernière couche de finition est particulièrement importante pour les secteurs de l'industrie alimentaire, car elle permet un meilleur nettoyage des surfaces, évitant la prolifération de bactéries dans les pores du revêtement. De plus, elle procure un plus bel aspect esthétique au revêtement.

Les Exemples non limitatifs suivants sont donnés afin de mieux illustrer l'objet de l'invention. Dans ces Exemples, les parties sont des parties en poids.

### EXEMPLE 1

On prépare les formulations (A) et (B) suivantes, destinées à être mélangées au moment de l'emploi pour former un béton de résine synthétique.

### Formulation (A)

· Méthacrylate de dicyclopentényloxyéthyle 160 parties
· Naphténate de cobalt (à 100% en poids) 1,06 parties
· N,N-diméthylparatoluidine 1,0 parties

### Formulation (B)

· Poly allyl glycidyl éther de formule : 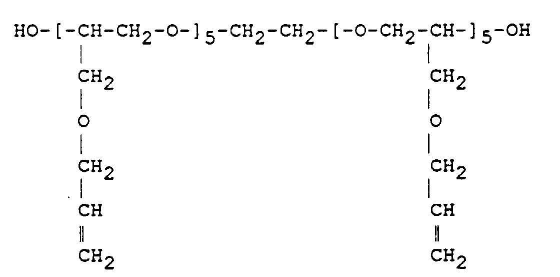 commercialisé par la Société MONSANTO sous la dénomination "SANTOLINK XI 100" 40 parties
· Peroxyde de dibenzoyle (à 75% en poids) 6 parties
· Charges minérales constituées de sable, gravier, farine de silice 1800 parties

Au moment de l'emploi, on mélange les formulations (A) et (B) pour former le béton que l'on étale, à l'aide d'une taloche, en une couche de 5 mm d'épaisseur, sur un sol de béton hydraulique recouvert d'un primaire d'adhésion.

La prise demeure après 10-15 minutes à 20°C, et conduit à une surface sèche 3 heures après la pose.

### EXEMPLE 2 (comparatif)

On reproduit l'Exemple 1, excepté que l'on utilise 200 parties de méthacrylate de dicyclopentényloxyéthyle et que l'on exclut le poly allyl glycidyl éther.

On obtient, de la même façon, un temps de prise d'environ 10 minutes, mais le poissage de la surface persiste jusqu'à 24 heures.

### EXEMPLES 3 à 6

On prépare diverses formulations (A) suivantes, destinées à être mélangées au moment de l'emploi avec une formulation (B) également indiquée ci-après, pour former des bétons de résines synthétiques.

### Formulation (A)

· Méthacrylate de dicyclopentényloxyéthyle (DCPOEMA) X parties (voir Tableau ci-après)
· Comonomère choisi parmi le triméthacrylate de triméthylolpropane (TMPTMA), le méthacrylate d'isobornyle (MAISOBOR) et le méthacrylate de nonyle (MANON) Y parties (voir Tableau ci-après)
· Naphténate de cobalt (à 8% en poids) 0,78 partie
· N,N-diméthylparatoluidine 0,1 partie

### Formulation (B)

· Poly allyl glycidyl éther de l'Exemple 1 5 parties
· Peroxyde de benzoyle (à 75% en poids) 0,33 partie
· Hydroperoxyde de cumène (à 80% en poids) 0,31 partie
· Charges minérales constituées de sable, gravier et farine de silice 75 parties

Au moment de l'emploi, on mélange les formulations (A) et (B) pour former le béton que l'on étale, à l'aide d'une taloche, en une couche de 5 mm d'épaisseur, sur un béton hydraulique recouvert d'un primaire d'adhésion. Les début et fin de prise ainsi que le temps TFT ("tack free time") nécessaire à l'obtention d'une surface sèche sont précisés dans le Tableau 1 suivant pour les quatre différentes combinaisons.

**TABLEAU 1**

| EXEMPLES | 3 | 4 | 5 | 6 |
|---|---|---|---|---|
| DCPOEMA (X parties) | 20 | 15 | 15 | 15 |
| TMPTMA (Y parties) | | 5 | | |
| MAISOBOR (Y parties) | | | 5 | |
| MANON (Y parties) | | | | 5 |
| Début de prise à 20°C en minutes | 12 | 10 | 12 | 16 |
| Fin de prise à 20°C (en minutes) | 45 | 30 | 48 | 55 |
| TFT (en heures) | 2h40mn | 3h00 | 2h25mn | 3h50mn |

### EXEMPLES 7 à 11

Diverses formulations sont préparées pour être utilisées comme revêtement de bétons.

Le mode opératoire est le suivant : les monomères et le polyallyl glycidyl éther de l'Exemple 1 sont mélangés. Sous agitation, on introduit successivement les peroxydes, le naphténate de cobalt et la N,N-diméthylparatoluidine. La solution obtenue est versée dans une coupelle sur 5 mm d'épaisseur et on examine les durées de prise et le temps TFT ("tack free time"), puis on mesure, après vieillissement de 10 jours en atmosphère ambiante, la dureté Shore A à 15 secondes et 45 secondes.

Les compositions et les résultats sont précisés dans le Tableau 2 ci-dessous.

Les solutions ainsi préparées peuvent être réparties uniformément sur l'un des bétons des Exemples 1 à 6 à l'aide d'une raclette.

**TABLEAU 2**

| EXEMPLES | 7 (comparatif) | 8 | 9 | 10 | 11 |
|---|---|---|---|---|---|
| Composition en monomère(s) A + Oligomère B (en parties) | | | | | |
| DCPOEMA | 5 | 4 | 3 | 3 | 3 |
| · Poly allyl glycidyl éther de l'Exemple 1 | - | 1 | 1 | 1 | 1 |
| · MAISOBOR | | | 1 | | |
| · MANON | | | | 1 | |
| · TMPTMA | | | | | 1 |
| Système C (en pourcentage en poids par rapport à la composition A + B ci-dessus) | | | | | |
| · Peroxyde de dibenzoyle à 40%, commercialisé sous la dénomination "CADOX 40E" par la Société AKZO | 0,6 | 0,6 | 0,6 | 0,6 | 0,6 |
| · Hydroperoxyde de cumène | 1,3 | 1,3 | 1,3 | 1,3 | 1,3 |
| · Naphténate de cobalt | 0,3 | 0,3 | 0,3 | 0,3 | 0,3 |
| · N,N-diméthylparatoluidine | 0,3 | 0,3 | 0,3 | 0,3 | 0,3 |
| Début de prise | Progressif | 15 mn | Progressif | Progressif | Progressif |
| Fin de prise | 30 mn | 35 mn | 29 mn | 93 mn | 29 mn |
| TFT | 15h | 3h | 3h15mn | 4h | 3h45mn |
| Dureté Shore A | | | | | |
| à 15 secondes | 97,2 | 83,5 | 92 | 47,8 | 92,8 |
| à 45 secondes | 97,2 | 75,8 | 92 | 36,3 | 92,8 |

## Revendications

1. Composition destinée à être utilisée comme liant dans la préparation de mortiers ou bétons de résines synthétiques ou comme primaire d'accrochage ou comme revêtement de finition, caractérisée par le fait qu'elle comprend :
(A) un système de monomères comprenant :
(a1) 50 à 90 parties en poids d'un ester dicyclopentényloxyalkylique de formule (I) : 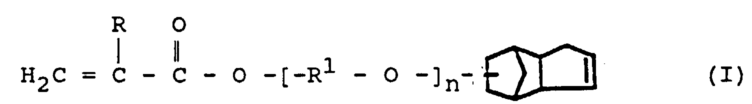 dans laquelle :
- R représente H ou CH₃ ;
- n valant 1 ou 2 ; et
- R¹ représente un groupe alkylène en C₂-C₆ ;
(a2) 0 à 25 parties en poids d'au moins un (méth)acrylate lourd donnant un homopolymère dont la température de transition vitreuse est supérieure à la température de transition vitreuse d'un homopolymère de l'ester (a1) ;
(a3) 0 à 25 parties en poids d'au moins un (méth)acrylate lourd donnant un homopolymère dont la température de transition vitreuse est inférieure à la température de transition vitreuse d'un homopolymère de l'ester (a1) ;
(a4) 0 à 25 parties en poids d'au moins un monomère présentant au moins deux insaturations (méth)acryliques ; et
(B) 5 à 30 parties en poids d'au moins un (poly)allyl glycidyl éther ; et
(C) un système d'amorçage choisi parmi les systèmes (C1) à (C4) suivants :
(C1) 0,1 à 3 parties en poids d'au moins un peroxyde organique dérivé d'un composé hydrocarboné en C₃-C₁₈, et 0,1 à 2 parties en poids d'au moins une amine aromatique ;
(C2) 0,1 à 3 parties en poids d'au moins un hydroperoxyde organique dérivé d'un composé hydrocarboné en C₃-C₁₈, et 0,0005 à 2 parties en poids d'au moins un sel métallique polyvalent ;
(C3) un mélange de (C1) et de 0,0005 à 2 parties en poids d'au moins un sel métallique polyvalent ; et
(C4) un mélange de (C1) et (C2),
toutes les quantités étant données pour 100 parties en poids de (A) + (B).

2. Composition selon la revendication 1, caractérisée par le fait que l'ester dicyclopentényloxyalkylique (a1) est le méthacrylate de dicyclopentényloxyéthyle.

3. Composition selon l'une des revendications 1 et 2, caractérisée par le fait que les (méth)acrylates lourds (a2) sont choisis parmi le méthacrylate d'isobornyle, l'acrylate d'isobornyle et le méthacrylate de tertiobutylcyclohexyle.

4. Composition selon l'une des revendications 1 à 3, caractérisée par le fait que les (méth)acrylates lourds (a3) sont choisis parmi le méthacrylate d'éthyltriglycol, l'acrylate de lauryle, l'acrylate de stéaryle, le méthacrylate de nonyle, l'acrylate de nonyle, le méthacrylate de lauryle et le méthacrylate de stéaryle, notamment les (méth)acrylates possédant une chaîne alkyle, linéaire ou ramifiée, ayant 12 ou plus de 12 atomes de carbone.

5. Composition selon l'une des revendications 1 à 4, caractérisée par le fait que les monomères (a4) sont choisis parmi le triméthacrylate de triméthylolpropane, le triacrylate de triméthylolpropane, le diméthacrylate de bisphénol A, le diméthacrylate de butanediol, le diméthacrylate d'hexanediol, le diméthacrylate de tripropylène glycol et le diméthacrylate de bisphénol A diglycidyléther.

6. Composition selon l'une des revendications 1 à 5, caractérisée par le fait que les (poly)allyl glycidyl éthers (B) sont choisis parmi ceux présentant des tensions de vapeur suffisamment faibles pour que la composition résultante soit sensiblement sans odeur.

7. Composition selon la revendication 6, caractérisée par le fait que les (poly)allyl glycidyl éthers (B) sont choisis parmi ceux représentés par les formules suivantes (II), (III) et (IV) : 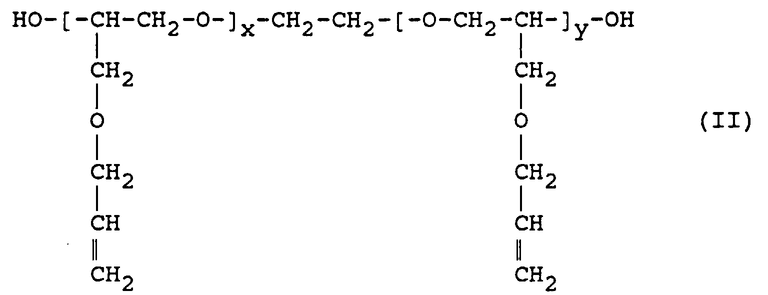 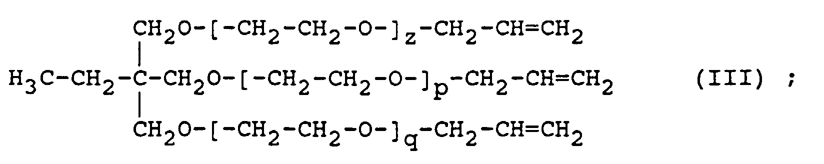 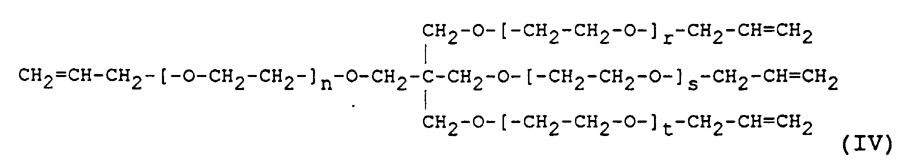 dans lesquelles x, y, z, p, q, r, s et t représentent chacun un entier de 2 à 10 inclus.

8. Composition selon l'une des revendications 1 à 7, caractérisée par le fait que les peroxydes organiques entrant dans la formulation des systèmes d'amorçage (C1), (C3) et (C4) sont choisis parmi le peroxyde de dibenzoyle, le perbenzoate de tertiobutyle, le 2,2-bis-(tertiobutylperoxy)butane et le tertiobutylperoxyisopropylcarbonate.

9. Composition selon l'une des revendications 1 à 7, caractérisée par le fait que les hydroperoxydes entrant dans la formulation des systèmes d'amorçage (C2) et (C4) sont choisis parmi l'hydroperoxyde de cumène, l'hydroperoxyde de tertiobutyle, l'hydroperoxyde de méthyléthylcétone et le diméthyl-2,5-bis-hydroperoxyde-2,5-hexane.

10. Composition selon l'une des revendications 1 à 7, caractérisée par le fait que les amines aromatiques entrant dans la formulation des systèmes d'amorçage (C1), (C3) et (C4) sont choisies parmi la N,N-diméthylaniline, la N,N-diméthylparatoluidine et le para-N,N-diméthylaminobenzaldéhyde.

11. Composition selon l'une des revendications 1 à 7, caractérisée par le fait que les sels métalliques polyvalents entrant dans les formulations des systèmes d'amorçage (C2), (C3) et (C4) sont des sels d'acides carboxyliques lourds en C₄-C₃₀, notamment les naphténates et octoates de cobalt II, de potassium, de calcium, de zirconium, de nickel ou de manganèse, et leurs mélanges.

12. Composition selon l'une des revendications 1 à 11, caractérisée par le fait qu'elle se présente sous la forme d'un système à deux composants devant être mélangés au moment de l'emploi.

13. Composition selon la revendication 12, caractérisée par le fait que l'un des composants est constitué par le système de monomères (A) et par le (ou les) amine(s) tertiaire(s) et/ou le (ou les) sel(s) métallique(s) du système d'amorçage (C), et l'autre composant, par le (ou les) (poly)allyl glycidyl éther(s) (B) et par le (ou les) peroxyde(s) et/ou le (ou les) hydroperoxyde(s) du système d'amorçage (C).

14. Composition de béton ou mortier de résine synthétique, comprenant des charges minérales inertes et un liant, caractérisée par le fait que le liant a la composition telle que définie à l'une des revendications 1 à 13.

15. Composition selon la revendication 14, caractérisée par le fait qu'elle comprend, pour 100 parties en poids :
- 10 à 25 parties du liant ; et
- 90 à 75 parties des charges.

16. Composition selon l'une des revendications 14 et 15, caractérisée par le fait que les charges ont une granulométrie comprise entre 100 µm et 9,5 mm, et sont notamment choisies parmi le sable, le gravier, la silice, le carbonate de calcium et le ciment Portland.

17. Béton ou mortier de résine auto-lissant obtenu à partir de la composition telle que définie à l'une des revendications 14 à 16.

18. Composition de primaire d'accrochage, caractérisée par le fait qu'elle comprend la composition telle que définie à l'une des revendications 1 à 13.

19. Composition de revêtement de finition, destinée à être appliquée notamment sur les bétons ou matériaux poreux, caractérisée par le fait qu'elle comprend la composition telle que définie à l'une des revendications 1 à 13, le cas échéant en mélange avec au moins un pigment minéral ou organique.

20. Revêtement de sol, appliqué notamment sur un sol de béton hydraulique, caractérisé par le fait qu'il comprend la succession des trois couches suivantes :
- une première couche d'accrochage, obtenue à partir de la composition de primaire telle que définie à la revendication 18, appliquée en une épaisseur d'environ 0,1 à 0,5 mm ;
- une deuxième couche de béton de résine synthétique, obtenue à partir de la composition de béton telle que définie à l'une des revendications 14 à 16, appliquée en une épaisseur d'environ 1 à 50 mm ; et
- une troisième couche de finition, obtenue à partir de la composition de revêtement telle que définie à la revendication 19, appliquée en une épaisseur d'environ 0,2 à 0,5 mm.

## Claims

1. Composition intended to be used as binder in the preparation of synthetic resin concretes or mortars or as bonding primer or as finishing coat, characterized in that it comprises:
(A) a system of monomers comprising:
(a1) 50 to 90 parts by weight of a dicyclopentenyloxyalkyl ester of formula (I): 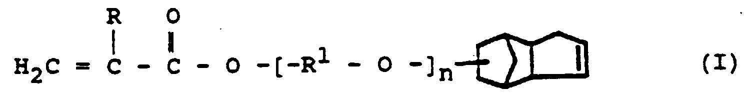 in which
- R represents H or CH₃;
- n has the value 1 or 2; and
- R¹ represents a C₂-C₆ alkylene group;
(a2) 0 to 25 parts by weight of at least one heavy (meth)acrylate giving a homopolymer in which the glass transition temperature is greater than the glass transition temperature of a homopolymer of the ester (a1);
(a3) 0 to 25 parts by weight of at least one heavy (meth)acrylate giving a homopolymer in which the glass transition temperature is lower than the glass transition temperature of a homopolymer of the ester (a1);
(a4) 0 to 25 parts by weight of at least one monomer having at least two (meth)acrylic unsaturations; and
(B) 5 to 30 parts by weight of at least one poly(allyl glycidyl ether); and
(C) an initiating system chosen from the following systems (C1) to (C4):
(C1) 0.1 to 3 parts by weight of at least one organic peroxide derived from a C₃-C₁₈ hydrocarbon compound and 0.1 to 2 parts by weight of at least one aromatic amine;
(C2) 0.1 to 3 parts by weight of at least one organic hydroperoxide derived from a C₃-C₁₈ hydrocarbon compound and 0.0005 to 2 parts by weight of at least one polyvalent metal salt;
(C3) a mixture of (C1) and of 0.0005 to 2 parts by weight of at least one polyvalent metal salt; and
(C4) a mixture of (C1) and (C2),
all the amounts being given per 100 parts by weight of (A) + (B).

2. Composition according to Claim 1, characterized in that the dicyclopentenyloxyalkyl ester (a1) is dicyclopentenyloxyethyl methacrylate.

3. Composition according to either of Claims 1 and 2, characterized in that the heavy (meth)acrylates (a2) are chosen from isobornyl methacrylate, isobornyl acrylate and tert-butylcyclohexyl methacrylate.

4. Composition according to one of Claims 1 to 3, characterized in that the heavy (meth)acrylates (a3) are chosen from ethyltriglycol methacrylate, lauryl acrylate, stearyl acrylate, nonyl methacrylate, nonyl acrylate, lauryl methacrylate and stearyl methacrylate, in particular (meth)acrylates possessing a linear or branched alkyl chain having 12 or more than 12 carbon atoms.

5. Composition according to one of Claims 1 to 4, characterized in that the monomers (a4) are chosen from trimethylolpropane trimethacrylate, trimethylolpropane triacrylate, bisphenol A dimethacrylate, butanediol dimethacrylate, hexanediol dimethacrylate, tripropylene glycol dimethacrylate and the dimethacrylate of bisphenol A diglycidyl ether.

6. Composition according to one of Claims 1 to 5, characterized in that the poly(allyl glycidyl ether)s (B) are chosen from those exhibiting vapour pressures which are sufficiently low for the resulting composition to be substantially odourless.

7. Composition according to Claim 6, characterized in that the poly(allyl glycidyl ether)s (B) are chosen from those represented by the following formulae (II), (III) and (IV): 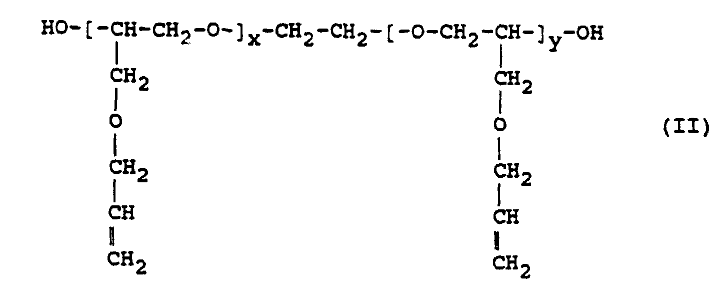 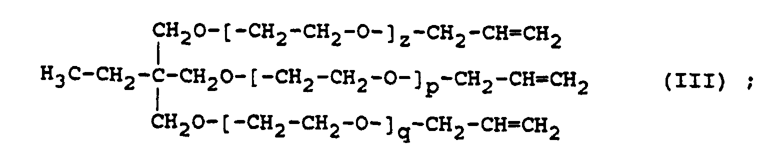 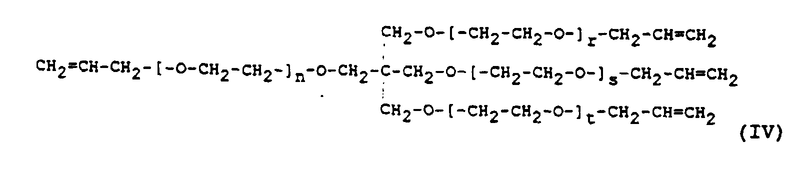 in which x, y, z, p, q, r, s and t each represent an integer from 2 to 10 inclusive.

8. Composition according to one of Claims 1 to 7, characterized in that the organic peroxides forming part of the formulation of the initiating systems (C1), (C3) and (C4) are chosen from dibenzoyl peroxide, tert-butyl perbenzoate, 2,2-bis(tert-butylperoxy)butane and tert-butylperoxy isopropyl carbonate.

9. Composition according to one of Claims 1 to 7, characterized in that the hydroperoxides forming part of the formulation of the initiating systems (C2) and (C4) are chosen from cumene hydroperoxide, tert-butyl hydroperoxide, methyl ethyl ketone hydroperoxide and 2,5-dimethyl-2,5-bis (hydroperoxy)hexane.

10. Composition according to one of Claims 1 to 7, characterized in that the aromatic amines forming part of the formulation of the initiating systems (C1), (C3) and (C4) are chosen from N,N-dimethylaniline, N,N-dimethyl-para-toluidine and para- (N,N-dimethylamino)benzaldehyde.

11. Composition according to one of Claims 1 to 7, characterized in that the polyvalent metal salts forming part of the formulations of the initiating systems (C2), (C3) and (C4) are salts of heavy C₄-C₃₀ carboxylic acids, in particular naphthenates and octoates of cobalt(II), of potassium, of calcium, of zirconium, of nickel or of manganese, and their mixtures.

12. Composition according to one of Claims 1 to 11, characterized in that it is provided in the form of a two-component system in which the components have to be mixed at the time of use.

13. Composition according to Claim 12, characterized in that one of the components is composed of the system of monomers (A) and of the tertiary amine(s) and/or the metal salt(s) of the initiating system (C), and the other component, of the poly(allyl glycidyl ether)(s) (B) and of the peroxide(s) and/or the hydroperoxide(s) of the initiating system (C).

14. Synthetic resin mortar or concrete composition comprising inert organic fillers and a binder, characterized in that the binder has the composition defined in one of Claims 1 to 13.

15. Composition according to Claim 14, characterized in that it comprises, per 100 parts by weight:
- 10 to 25 parts of the binder; and
- 90 to 75 parts of the fillers.

16. Composition according to either of Claims 14 and 15, characterized in that the fillers have a particle size of between 100 µm and 9.5 mm and are chosen in particular from sand, gravel, silica, calcium carbonate and Portland cement.

17. Self-levelling resin mortar or concrete obtained from the composition as defined in one of Claims 14 to 16.

18. Bonding primer composition, characterized in that it comprises the composition as defined in one of Claims 1 to 13.

19. Finishing coat composition, intended to be applied in particular on concretes or porous materials, characterized in that it comprises the composition as defined in one of Claims 1 to 13, if appropriate as a mixture with at least one inorganic or organic pigment.

20. Flooring, applied in particular on a hydraulic concrete floor, characterized in that it comprises a sequence of the following three layers:
- a first bonding layer, obtained from the primer composition as defined in Claim 18, applied in a thickness of approximately 0.1 to 0.5 mm;
- a second synthetic resin concrete layer, obtained from the concrete composition as defined in one of Claims 14 to 16, applied in a thickness of approximately 1 to 50 mm; and
- a third finishing layer, obtained from the coating composition as defined in Claim 19, applied in a thickness of approximately 0.2 to 0.5 mm.

## Patentansprüche

1. Zusammensetzung zur Verwendung als Bindemittel bei der Herstellung von Mörtel- oder Betonprodukten aus Kunstharzen, als Grundieranstrichmittel oder als Endanstrichmittel, dadurch gekennzeichnet, daß sie folgende Bestandteile enthält:
(A) ein System von Monomeren, umfassend:
(a1) 50 bis 90 Gew.-teile eines Dicyclopentenyloxyalkylesters der Formel (I) : 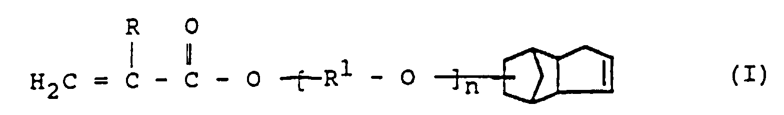 in der:
- R die Bedeutung H oder CH₃ hat;
- n den Wert 1 oder 2 hat; und
- R¹ eine C₂-C₆-Alkylengruppe bedeutet;
(a2) 0 bis 25 Gew.-teile mindestens eines schweren (Meth)acrylats, das ein Homopolymeres ergibt, dessen Glasübergangstemperatur über der Glasübergangstemperatur eines Homopolymeren des Esters (a1) liegt;
(a3) 0 bis 25 Gew.-teile mindestens eines schweren (Meth)acrylats, das ein Homopolymeres ergibt, dessen Glasübergangstemperatur unter der Glasübergangstemperatur eines Homopolymeren des Esters (a1) liegt;
(a4) 0 bis 25 Gew.-teile mindestens eines Monomeren, das mindestens zwei ungesättigte (Meth)acrylgruppen aufweist; und
(B) 5 bis 30 Gew.-teile mindestens eines (Poly)allylglycidylesters; und
(C) ein Initiatorsystem, das unter den folgenden Systemen (C1) bis (C4) ausgewählt ist:
(C1) 0,1 bis 3 Gew.-teile mindestens eines organischen Peroxids, das von einer C₃-C₁₈-Kohlenwasserstoffverbindung abgeleitet ist, und 0,1 bis 2 Gew.-teile mindestens eines aromatischen Amins;
(C2) 0,1 bis 3 Gew.-teile mindestens eines organischen Hydroperoxids, das von einer C₃-C₁₈-Kohlenwasserstoffverbindung abgeleitet ist, und 0,0005 bis 2 Gew.-teile mindestens eines mehrwertigen Metallsalzes;
(C3) ein Gemisch aus (C1) und 0,0005 bis 2 Gew.-teile mindestens eines mehrwertigen Metallsalzes; und
(C4) ein Gemisch aus (C1) und (C2),
wobei sämtliche Mengen auf 100 Gew.-teile aus (A) + (B) bezogen sind.

2. Zusammensetzung nach Anspruch 1, dadurch gekennzeichnet, daß es sich beim Dicyclopentenyloxyalkylester (a1) um Dicyclopentenyloxyethylmethacrylat handelt.

3. Zusammensetzung nach den Ansprüchen 1 und 2, dadurch gekennzeichnet, daß die schweren (Meth)acrylate (a2) ausgewählt sind unter Isobornylmethacrylat, Isobornylacrylat und tert.-Butylcyclohexylmethacrylat,

4. Zusammensetzung nach einem der Ansprüche 1 bis 3, dadurch gekennzeichnet, daß die schweren (Meth)acrylate (a3) ausgewählt sind unter Ethyltriglykolmethacrylat, Laurylacrylat, Stearylacrylat, Nonylmethacrylat, Nonylacrylat, Laurylmethacrylat und Stearylmethacrylat, wobei insbesondere die (Meth)acrylate eine lineare oder verzweigte Alkylkette mit 12 oder mehr als 12 Kohlenstoffatomen aufweisen.

5. Zusammensetzung nach einem der Ansprüche 1 bis 4, dadurch gekennzeichnet, daß die Monomeren (a4) ausgewählt sind unter Trimethylolpropantrimethacrylat, Trimethylolpropantriacrylat, Bisphenol A-dimethacrylat, Butandioldimethacrylat, Hexandioldimethacrylat, Tripropylenglykoldimethacrylat und Bisphenol A-diglycidyletherdimethacrylat.

6. Zusammensetzung nach einem der Ansprüche 1 bis 5, dadurch gekennzeichnet, daß die (Poly)-allylglycidylether (B) unter Produkten ausgewählt sind, deren Dampfspannungen ausreichend nieder sind, so daß die sich ergebende Zusammensetzung im wesentlichen geruchsfrei ist.

7. Zusammensetzung nach Anspruch 6, dadurch gekennzeichnet, daß die (Poly)-allylglycidylether (B) unter Produkten der folgenden Formeln (II), (III) und (IV) ausgewählt sind: 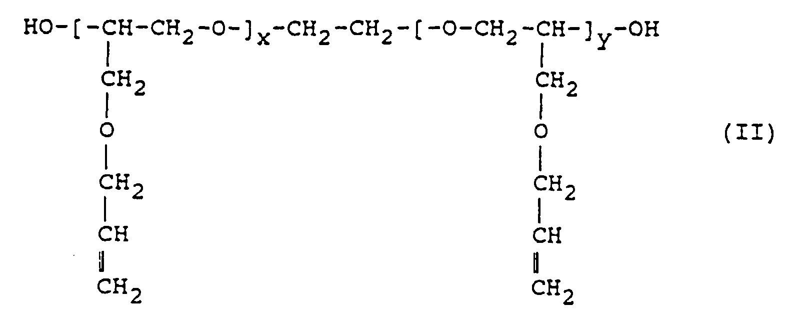 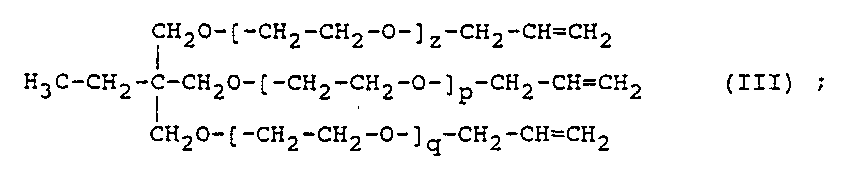 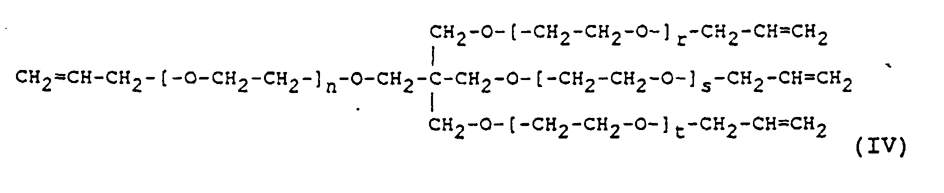 in denen x, y, z, p, q, r, s und t jeweils eine ganze Zahl von 2 bis 10 bedeuten.

8. Zusammensetzung nach einem der Ansprüche 1 bis 7, dadurch gekennzeichnet, daß die organischen Peroxide in der Zubereitung der Initiatorsysteme (C1), (C3) und (C4) ausgewählt sind unter Dibenzoylperoxid, tert.-Butylperbenzoat, 2,2-Bis-(tert.-butylperoxy)-butan und tert.-Butylperoxyisopropylcarbonat.

9. Zusammensetzung nach einem der Ansprüche 1 bis 7, dadurch gekennzeichnet, daß die Hydroperoxide in der Zubereitung der Initiatorsysteme (C2) und (C4) ausgewählt sind unter Cumolhydroperoxid, tert.-Butylhydroperoxid, Methylethylketonhydroperoxid und Dimethyl-2,5-bis-hydroperoxid-2,5-hexan.

10. Zusammensetzung nach einem der Ansprüche 1 bis 7, dadurch gekennzeichnet, daß die aromatischen Amine in der Zubereitung der Initiatorsysteme (C1), (C3) und (C4) ausgewählt sind unter N,N-Dimethylanilin, N,N-Dimethyl-p-toluidin und p-N,N-Dimethylaminobenzaldehyd.

11. Zusammensetzung nach einem der Ansprüche 1 bis 7, dadurch gekennzeichnet, daß die mehrwertigen Metallsalze in den Zubereitngen der Initiatorsysteme (C2), (C3) und (C4) ausgewählt sind unter schweren C₄-C₃₀-Carbonsäuresalzen, insbesondere Naphthenaten und Octoaten von Kobalt II, Kalium, Calcium, Zirkonium, Nickel oder Mangen und deren Gemischen.

12. Zusammensetzung nach einem der Ansprüche 1 bis 11, dadurch gekennzeichnet, daß sie in Form eines Systems aus zwei Komponenten vorliegt, die zum Zeitpunkt der Anwendung miteinander vermischt werden müssen.

13. Zusammensetzung nach Anspruch 12, dadurch gekennzeichnet, daß einer der Bestandteile aus dem System der Monomeren (A) und aus dem oder den tertiären Aminen und/oder dem oder den Metallsalzen des Initiatorsystems (C) besteht und der andere Bestandteil aus dem oder den (Poly)allylglycidylethern (B) und aus dem oder den Peroxiden und/oder dem oder den Hydroperoxiden des Initiatorsystems (C) besteht.

14. Beton- oder Mörtelzusammensetzung aus Kunstharz, umfassend inerte anorganische Füllstoffe und ein Bindemittel, dadurch gekennzeichnet, daß das Bindemittel gemäß einem der Ansprüche 1 bis 13 zusammengesetzt ist.

15. Zusammensetzung nach Anspruch 14, dadurch gekennzeichnet, daß sie pro 100 Gew.-teile folgende Bestandteile enthält:
- 10 bis 25 Gew.-teile Bindemittel; und
- 90 bis 75 Gew.-teile Füllstoffe.

16. Zusammensetzung nach einem der Ansprüche 14 und 15, dadurch gekennzeichnet, daß die Füllstoffe eine granulometrische Verteilung von 100 µm bis 9,5 µm aufweisen und insbesondere unter Sand, Kies, Siliciumdioxid, Calciumcarbonat und Portland-Zement ausgewählt sind.

17. Selbstbindender Kunstharzbeton oder -mörtel, erhalten aus einer Zusammensetzung gemäß einem der Ansprüche 14 bis 16.

18. Grundieranstrichmittel, dadurch gekennzeichnet, daß es eine Zusammensetzung gemäß der Definition in einem der Ansprüche 1 bis 13 umfaßt.

19. Endanstrichmittel, insbesondere zum Aufbringen auf Beton oder poröse Materialien, dadurch gekennzeichnet, daß es die Zusammensetzung gemäß der Definition in einem der Ansprüche 1 bis 13 umfaßt, gegebenenfalls im Gemisch mit mindestens einem anorganischen oder organischen Pigment.

20. Bodenanstrich, insbesondere aufgebracht auf hydraulischen Beton, dadurch gekennzeichnet, daß er nacheinander die folgenden drei Schichten umfaßt:
- eine erste Grundierschicht, erhalten aus einer Grundiermittelzusammensetzung gemäß der Definition in Anspruch 18, aufgebracht in einer Dicke von etwa 0,1 bis 0,5 mm;
- eine zweite Schicht aus Kunstharzbeton, erhalten aus einer Betonzusammensetzung gemäß der Definition in einem der Ansprüche 14 bis 16, aufgebracht in einer Dicke von etwa 1 bis 50 mm; und
- eine dritte Endanstrichschicht, erhalten aus der Anstrichmittelzusammensetzung gemäß der Definition von Anspruch 19, aufgebracht in einer Dicke von etwa 0,2 bis 0,5 mm.
